(19) Europäisches Patentamt
European Patent Office
Office européen des brevets

(11) EP 0 530 075 B1

# (12) FASCICULE DE BREVET EUROPEEN

(45) Date de publication et mention
de la délivrance du brevet:
**29.05.1996 Bulletin 1996/22**

(51) Int. Cl.⁶: **B64C 27/00**, F16F 15/00

(21) Numéro de dépôt: **92402290.8**

(22) Date de dépôt: **13.08.1992**

(54) **Procédé et dispositif pour filtrer les excitations vibratoires transmises entre deux pièces notamment entre le rotor et le fuselage d'un hélicoptère**

Verfahren und Vorrichtung zum Filtrieren der Schwingungen zwischen zwei Teilen, insbesondere zwischen dem Rotor und dem Rumpf eines Hubschraubers

Method and device to filter the vibratory excitations between two pieces, in particular between the rotor and the fuselage of an helicopter

(84) Etats contractants désignés:
**DE GB IT**

(30) Priorité: **29.08.1991 FR 9110722**

(43) Date de publication de la demande:
**03.03.1993 Bulletin 1993/09**

(73) Titulaire: **AEROSPATIALE SOCIETE NATIONALE INDUSTRIELLE**
**F-75016 Paris (FR)**

(72) Inventeurs:
• **Girard, Laurent**
**F-13001 Marseille (FR)**
• **Krysinski, Tomasz**
**F-13008 Marseille (FR)**
• **Michel, Pierre**
**F-13100 Aix-en-Provence (FR)**

(74) Mandataire: **Bonnetat, Christian**
**CABINET BONNETAT**
**23, Rue de St. Pétersbourg**
**F-75008 Paris (FR)**

(56) Documents cités:
**FR-A- 1 506 385**      **FR-A- 2 200 457**
**FR-A- 2 642 493**

## Description

La présente invention concerne un procédé pour filtrer les excitations vibratoires transmises entre deux pièces et un dispositif de liaison élastique entre deux pièces pour transmettre de l'une à l'autre les efforts statiques dans l'axe du dispositif et simultanément filtrer les excitations vibratoires coaxiales associées qui sont transmises de l'une à l'autre.

Plus particulièrement, quoique non exclusivement, un tel dispositif peut être utilisé dans la suspension reliant la boîte de transmission principale au fuselage d'un aéronef à voilure tournante, tel qu'un hélicoptère, pour filtrer les vibrations engendrées par le rotor et transmises au fuselage dudit aéronef par ladite boîte de transmission.

En effet, l'un des problèmes fondamentaux de l'hélicoptère relève du niveau vibratoire général qui conditionne, d'une part, le niveau des contraintes alternées dans toute la machine ( et par conséquent la tenue en fatigue et par suite la durée de vie des pièces) et, d'autre part, le confort en cabine et les vibrations des commandes.

L'objet de nombreuses recherches a donc été d'atténuer, à défaut de l'annuler complètement, ce niveau vibratoire inhérent au fonctionnement même du rotor qui non seulement transmet au moyeu des efforts et des moments statiques ou quasi-statiques créés par :

- la portance (perpendiculaire au plan du rotor),
- la traînée (dans le plan du rotor et parallèle à la composante $V_H$, normale au mât-rotor, de la vitesse d'avancement de l'appareil),
- la force de dérive (perpendiculaire aux deux précédentes et également dans le plan du rotor) qui reste faible et qui peut généralement être négligée,

mais également des efforts et des moments périodiques provenant des dissymétries aérodynamiques (portance et traînée de profil) qui apparaissent au cours de la rotation des pales, essentiellement dues à la vitesse d'avancement en vol de translation à grande vitesse, ou encore des dissymétries résultant de l'inégalité de répartition des vitesses induites sur le disque du rotor à faible vitesse (zone de transition). Ces efforts et moments aérodynamiques alternés sont transmis au centre du rotor après avoir été atténués ou amplifiés par les pales.

En désignant d'une façon générale par $\Omega$ le régime de rotation du rotor exprimé en nombre de tours par seconde et par b le nombre de pales, il est rappelé que :

- les efforts (dus aux mouvements de battement des pales) et les moments (dus aux mouvements de traînée des pales) dont les axes sont portés par l'axe du rotor, ne sont transmis au mât et au fuselage que si leur fréquence exprimée en hertz (Hz) est un harmonique de b$\Omega$, donc de la forme kb$\Omega$ (k : entier positif, égal ou supérieur à 1), le transfert de ces efforts et moments des axes tournants aux axes fixes s'effectuant sans changement de fréquence (effets de pompage et de torsion dans la structure) ;
- les efforts (dus aux mouvements de traînée de pales) et les moments (dus aux mouvements de battement des pales) dont les axes sont dans le plan du rotor, ne sont transmis au mât et au fuselage que si leur fréquence est de la forme (kb±1)$\Omega$, les efforts et moments résultants étant alors à la fréquence kb$\Omega$ en axes fixes (effets de roulis et de tangage, tamis transversal ou longitudinal, principalement en b$\Omega$).

En conséquence, on retiendra qu'un rotor équilibré ne transmet, outre les efforts et les moments statiques, que des efforts et des moments alternés d'une fréquence multiple du régime du rotor multiplié par le nombre de pales, la fréquence fondamentale valant b$\Omega$

Il conviendrait alors, pour éviter les efforts périodiques dangereux de fréquence multiple du régime du rotor, d'augmenter le nombre de pales car :

- les harmoniques d'excitation au niveau des pales affectant les vibrations dans le fuselage sont distribués suivant l'ordre ci-après :

| . bipale | 1 | 2 | 3 | 4 | 5 | 6 | 7 | 8 | 9 | 10 | 11 |
|---|---|---|---|---|---|---|---|---|---|---|---|
| . tripale | | 2 | 3 | 4 | 5 | 6 | 7 | 8 | 9 | 10 | 11 |
| . quadripale | | | 3 | 4 | 5 | | 7 | 8 | 9 | | 11 |
| . pentapale | | | | 4 | 5 | 6 | | | 9 | 10 | 11 |

- l'amplitude des harmoniques est d'autant plus faible que leur ordre est plus élevé ;

2

- les excitations affectant le confort sont les harmoniques $(kb\pm1)\Omega$ dans les axes des pales qui se retrouvent, après composition, sur les fréquences $kb\Omega$ dans le fuselage de l'hélicoptère ;

- plus la fréquence d'excitation est basse, plus l'homme est sensible, et cela notamment suivant l'axe vertical.

Pour des raisons de coût et de complexité, il convient néanmoins de limiter le nombre des pales.

Par ailleurs, il est bien connu que les performances augmentant, les excitations augmentent comme $V^n$ (n>1) : à grande vitesse, le niveau vibratoire dans le fuselage croît de la même manière.

Ces remarques, complétées par l'évidence d'impératifs de confort de plus en plus importants, justifient d'imaginer des systèmes capables de transmettre les efforts et moments statiques désignés par $F_0$ tout en atténuant les vibrations, correspondant à la décomposition en série de Fourier $\Sigma Fn \cos n\Omega t$ (t : temps, n : ordre des harmoniques). Cette atténuation doit tendre notamment à minimiser les composantes verticales des sollicitations dynamiques au niveau du fuselage, qui s'avèrent les plus gênantes en pratique.

On rappelle également que la prise en compte des paramètres conditionnant les niveaux vibratoires a lieu dès le stade de la conception d'un rotor afin d'en minimiser les effets : type de moyeu (moyeu rigide ou articulé) et choix du nombre de pales, optimisation aérodynamique des pales pour diminuer les excitations et optimisation de la réponse dynamique des pales pour réduire le torseur (efforts et moments) transmis à la tête du rotor.

Lorsque ces choix et les compromis effectués ne donnent pas les résultats théoriques (ou expérimentaux) escomptés sur les niveaux vibratoires, on a alors recours à des moyens d'action complémentaires pour modifier le torseur d'excitation appliqué au fuselage :

1/ soit, au niveau du rotor, avec l'adoption d'antivibreurs pendulaires passifs (ou systèmes masse-ressort disposés sur la tête du rotor, par exemple) ou d'une commande multicylique active. Dans ce dernier cas, un calculateur transmet des signaux à la commande de pas cyclique des pales par l'intermédiaire des servo-commandes, analyse l'effet produit et optimise l'entrée jusqu'à avoir en sortie une accélération minimale ; en d'autres termes, le contrôle multi-cyclique est une solution spécifique aux hélicoptères, basée sur la modification des efforts aérodynamiques appliqués aux pales (et, par suite, sur la modification du torseur d'excitation en tête du rotor, donc à l'extérieur du fuselage) par injection multicyclique des commandes de pas ;

2/ soit, au niveau du fuselage (conçu à l'origine avec, entre autres impératifs, celui de ne pas posséder de mode propre de vibrations trop proche des principales fréquences d'excitation), par un traitement :

- local, en modifiant les déformées des réponses dynamiques de la structure (batteries déplacées, raidissement d'éléments) ou en installant des résonateurs masse-ressort (batteries sur ressort par exemple),
- global, par un contrôle actif de la structure, basé sur la modification du torseur d'excitation appliqué au fuselage (c'est-à-dire la distribution des efforts intérieurs) et de la réponse de celui-ci (brevets FR-1 506 385 et FR-2 566 862) ;

3/ soit encore en intervenant au niveau de l'interface entre les ensembles mécaniques du rotor principal et le fuselage pour filtrer le transfert des vibrations du rotor vers la cellule, par des suspensions passives notamment, telles que décrites, par exemple, dans les brevets FR-1 507 306, FR-2 499 505 et FR-2 629 545.

Plus précisément, le brevet FR-1 506 385 concerne un procédé d'atténuation et un atténuateur électrohydraulique pour un aéronef à voilure tournante. Le procédé consiste à créer, à partir des accélérations dynamiques mesurées sur le fuselage, des signaux électriques transformés en variations de pression hydraulique au moyen d'une servovalve électrohydraulique, lesquelles variations de pression sont transmises à un vérin à double effet disposé entre le fuselage et la boîte de transmission principale, de façon à s'opposer aux vibrations. Pour cela, un accéléromètre situé dans le fuselage de l'aéronef est relié au circuit de commande du vérin à double effet. Le vérin constitue une quatrième barre de liaison, ou, en alternative, une des barres usuelles qui comporte, dans ce cas, un organe élastique en parallèle assurant la souplesse nécessaire pour le bon fonctionnement du dispositif tout en pouvant reprendre les efforts de portance et de manoeuvre (sensiblement statiques).

Un développement de ce concept est décrit dans le brevet FR-2 566 862, dans lequel on prévoit, entre le fuselage et le rotor d'un hélicoptère, une pluralité d'actionneurs dont les oscillations sont commandées en phase et en amplitude grâce au traitement de signaux représentatifs des accélérations dynamiques, mesurées par une pluralité d'accéléromètres agencés sur le fuselage. Un tel système fonctionne en boucle fermée. A partir des mesures accélérométriques sur le fuselage, on obtient, à l'aide d'un calculateur, les commandes optimales à engendrer. L'application effective de ces commandes modifie l'état du fuselage et donc les mesures subséquentes.

En outre, un procédé et un dispositif selon les préambules respectifs des revendications 1 et 9 sont connus du document FR-A-2 642 493.

Cependant, de telles mesures accélérométriques sont susceptibles d'être affectées par des erreurs et incertitudes, dues notamment à des décalages possibles de phase, du fait même qu'elles sont effectuées sur le fuselage de l'aéronef.

La présente invention a pour but d'éviter cet inconvénient.

A cet effet, le procédé pour filtrer les excitations vibratoires transmises entre deux pièces, reliées par au moins un élément de liaison comprenant un organe de transmission de l'effort statique entre lesdites pièces, et un actionneur associé audit organe de transmission, procédé dans lequel :

- on mesure une grandeur physique représentative des excitations vibratoires transmises de l'une à l'autre pièce et on engendre des premiers signaux correspondants,
- on traite lesdits premiers signaux pour convertir ceux-ci en des seconds signaux de commande dudit actionneur, commandé pour s'opposer auxdites excitations vibratoires,

est remarquable, selon l'invention, en tant que grandeur physique, on mesure la déformation axiale de l'organe de transmission dudit élément de liaison, et en ce que le découplage de l'effort statique et des excitations vibratoires est effectué par lesdits moyens de traitement, de sorte que lesdits seconds signaux de commande pilotent l'actionneur pour s'opposer strictement auxdites excitations vibratoires.

Ainsi, effectuer la mesure de ladite grandeur physique directement sur l'élément de liaison permet de s'affranchir des erreurs ou incertitudes liées aux mesures effectuées sur l'une des pièces en question, notamment le fuselage d'un hélicoptère.

De préférence, dans le cas où une pluralité d'éléments de liaison relient lesdites pièces, on mesure ladite grandeur physique sur chacun desdits éléments de liaison.

Selon une autre caractéristique de l'invention, pendant le traitement desdits premiers signaux, on identifie, dans chaque élément de liaison, la ou les composantes harmoniques des excitations vibratoires auxquelles l'actionneur respectif doit s'opposer.

En particulier, pour ladite identification, on peut effectuer soit une analyse temporelle en temps réel, par filtrage passe-bande numérique ou analogique, soit une analyse de Fourier.

Par ailleurs, lesdits seconds signaux de commande des différents actionneurs peuvent être engendrés soit de façon indépendante, soit de façon dépendante.

Selon une autre caractéristique de l'invention, dans le cas où des liaisons supplémentaires et passives sont prévues entre lesdites pièces, de préférence :

- on mesure de plus ladite grandeur physique sur une ou des liaisons supplémentaires et passives, et
- on élabore les signaux de commande, dépendants, de chacun desdits actionneurs, en appliquant une minimisation automatique et continue du critère de performances PI de formule :

$$PI = \sum_{k=1}^{p} \left[ \sum_{i=1}^{N+M} a_{ii} \left( \varepsilon_{kf} \right)^2{}_i + \sum_{(i \neq j)=1}^{N+M} a_{ij} \left( \varepsilon_{kf} \right)_i \left( \varepsilon_{kf} \right)_j \right]$$

dans laquelle :

- $N$ = nombre d'actionneurs et de mesures correspondantes,
- $M$ = nombre de mesures sur la ou les liaisons supplémentaires et passives,
- $\varepsilon_{kf}$ = composante harmonique de rang $\underline{k}$ de ladite grandeur physique de fréquence fondamentale $\underline{f}$,
- $p$ = nombre de composantes harmoniques à filtrer,
- $|a|$ = matrice de pondération de l'effet de chaque élément de liaison.

La présente invention concerne également un dispositif de liaison élastique entre deux pièces pour transmettre de l'une à l'autre les efforts statiques dans l'axe du dispositif et simultanément filtrer les excitations vibratoires coaxiales associées qui sont transmises de l'une à l'autre, du type comportant :

- au moins un élément de liaison entre lesdites pièces comprenant un organe de transmission de l'effort statique entre lesdites pièces, et un actionneur associé audit organe de transmission,
- au moins un moyen de mesure d'une grandeur physique représentative des excitations vibratoires transmises de l'une à l'autre pièce, et susceptible de fournir des premiers signaux correspondants, et
- des moyens électroniques de traitement desdits premiers signaux pour convertir ceux-ci en des seconds signaux de commande dudit actionneur, commandé pour s'opposer auxdites excitations vibratoires,

remarquable en ce que ledit moyen de mesure est monté sur l'organe de transmission dudit élément de liaison et mesure la déformation axiale dudit organe et en ce que lesdits moyens de traitement découplent l'effort statique et les excitations vibratoires, de sorte que lesdits seconds signaux de commande pilotent l'actionneur pour s'opposer strictement auxdites excitations vibratoires.

Dans le cas où le dispositif comporte une pluralité desdits éléments de liaison entre lesdites pièces et une pluralité desdits moyens de mesure, un moyen de mesure est, avantageusement, monté sur chacun desdits éléments de liaison.

De préférence, ledit capteur est une jauge extensométrique.

Par ailleurs, ledit actionneur peut être un vérin à double effet monté en parallèle sur ledit organe de liaison, et commandé par l'intermédiaire d'une électrovanne.

Avantageusement, lesdits moyens électroniques de traitement comprennent des moyens d'analyse pour identifier, dans chaque élément de liaison, la ou les composantes harmoniques des excitations vibratoires auxquelles l'actionneur respectif doit s'opposer En particulier, lesdits moyens d'analyse peuvent effectuer une analyse temporelle en temps réel, par filtrage passe-bande numérique ou analogique, ou une analyse de Fourier.

Par ailleurs, le dispositif dans lequel des liaisons supplémentaires et passives sont prévues entre lesdites pièces, est remarquable en ce que, de préférence, des moyens additionnels de mesure de ladite grandeur physique sont montés en plus sur la ou lesdites liaisons supplémentaires et passives et les signaux de commande, dépendants, de chacun desdits actionneurs, sont élaborés en appliquant une minimisation automatique et continue du critère de performances PI de formule :

$$PI = \sum_{k=1}^{p} \left[ \sum_{i=1}^{N+M} a_{ii} \left( \varepsilon_{kf} \right)^2{}_i + \sum_{(i \neq j)=1}^{N+M} a_{ij} \left( \varepsilon_{kf} \right)_i \left( \varepsilon_{kf} \right)_j \right]$$

dans laquelle :

- N = nombre d'actionneurs et de mesures correspondantes,
- M = nombre de mesures sur la ou les liaisons supplémentaires et passives,
- $\varepsilon_{kf}$ = composante harmonique de rang $\underline{k}$ de ladite grandeur physique de fréquence fondamentale $\underline{f}$,
- p = nombre de composantes harmoniques à filtrer,
- |a| = matrice de pondération de l'effet de chaque élément de liaison.

Les figures du dessin annexé feront bien comprendre comment l'invention peut être réalisée.

La figure 1 est une vue schématique en perspective d'un hélicoptère incorporant le dispositif de liaison élastique selon l'invention.

La figure 2 illustre schématiquement un dispositif de liaison élastique selon l'invention.

La figure 3 montre un exemple d'agencement des éléments de liaison du dispositif de l'invention entre la boîte de transmission principale et le fuselage d'un hélicoptère.

La figure 4 est la coupe selon la ligne IV-IV de la figure 3.

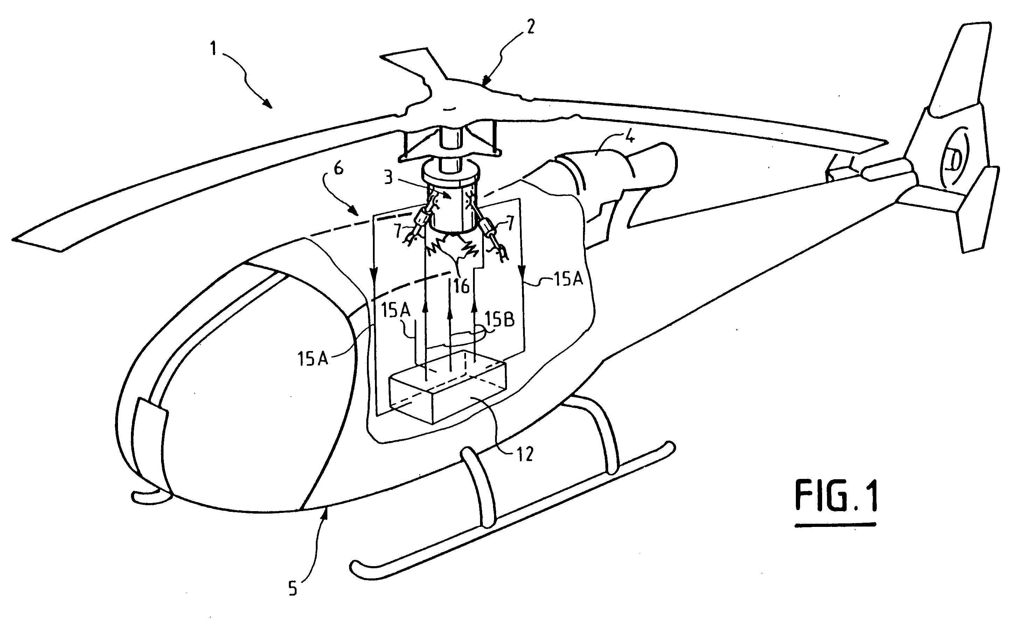

Comme on le voit sur la figure 1, l'hélicoptère 1 comporte un rotor principal de sustentation 2 entraîné par une boîte de transmission principale 3 de la puissance motrice fournie par le moteur 4, boîte qui supporte le fuselage 5.

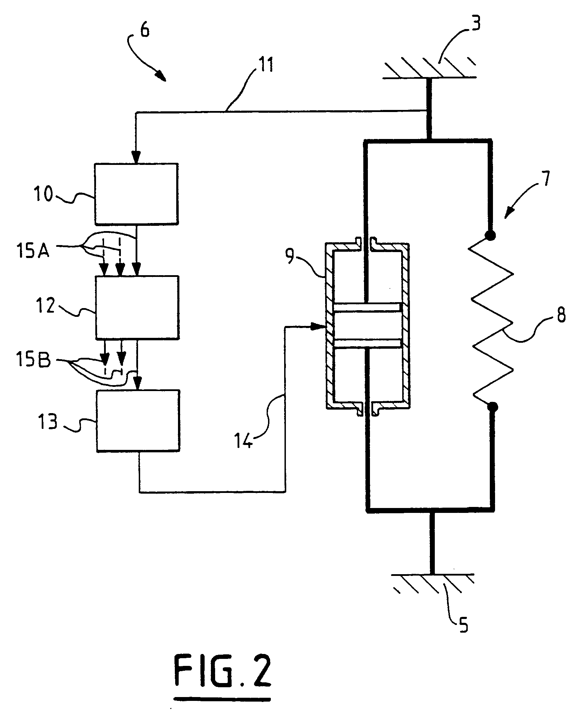

Entre la boîte de transmission principale 3 et le fuselage 5, on prévoit un dispositif de liaison élastique 6 comportant une pluralité d'éléments de liaison 7 (dont le nombre est au moins égal à trois), reliés, d'une part, à la boîte de transmission principale 3 et, d'autre part, au fuselage 4, et comprenant, chacun, comme montré sur la figure 2, un organe 8 de transmission de l'effort statique entre la boîte de transmission principale 3 et le fuselage 5 (à raideur adaptée à un fonctionnement optimal du dispositif), et un actionneur 9 associé en parallèle à l'organe de transmission 8, et qui peut être, comme illustré, un vérin à double effet qui pourrait être généralement comme décrit dans FR-1 506 385. Un capteur 10, monté sur chaque élément de liaison 7, en étant intégré ou relié de toute façon appropriée à ce dernier (comme cela est illustré de façon très schématique sur la figure 2 par la liaison 11), permet de mesurer une grandeur physique représentative des excitations vibratoires transmises de la boîte de transmission principale 3 au fuselage 5. Un tel capteur, qui peut être une jauge extensométrique mesurant la déformation axiale de l'élément de liaison respectif (notamment l'organe 8 de transmission de l'effort statique), fournit des premiers signaux électriques (par la liaison 15A) à un calculateur 12 convertissant lesdits premiers signaux en seconds signaux de commande de l'actionneur 9 (liaison 15B), commandé, par l'intermédiaire de l'électrovanne 13 (liaison 14), pour s'opposer aux excitations vibratoires (la source d'alimentation de l'actionneur n'est pas représentée).

Ces seconds signaux de commande peuvent être engendrés de façon indépendante ou de façon dépendante, selon que la commande d'un actionneur donné doit dépendre, ou non, des commandes des autres actionneurs. Par ailleurs, le calculateur 12 peut être commun à tous les éléments de liaison 7, comme cela est symbolisé par les entrées 15A et les sorties 15B supplémentaires du calculateur 12 sur les figures 1 et 2.

Comme expliqué plus en détail par la suite, le calculateur 12 comporte des moyens d'analyse pour identifier, dans chaque élément de liaison 7, la ou les composantes harmoniques des excitations vibratoires auxquelles l'actionneur respectif 9 doit s'opposer, en effectuant soit une analyse temporelle en temps réel, par filtrage passe-bande numérique ou analogique, soit une analyse de Fourier.

Le dispositif de l'invention utilise donc des modules 7 constitués de l'association en parallèle, d'une part, d'un organe 8 à raideur passive optimale pour transmettre les efforts statiques (portance de l'appareil) ou quasi statiques (manoeuvres lentes) et, d'autre part, d'un actionneur 9, piloté en effort, pour minimiser, voire annuler les harmoniques d'excitation aux fréquences $kb\Omega$ ($k$ = entier $\geq 1$ ; $b$ = nombre de pales ; $\Omega$ = régime de rotation du rotor en tours par seconde, fréquences en Hz) transmis de la tête du rotor au fuselage.

Il est évident que, pour filtrer tous les harmoniques (multiples du régime de rotation rotor multipliés par le nombre de pales), la commande $\underline{x}$ doit être du type :

$$x = \sum_{k=1}^{y} x_{kb\Omega}$$

étant entendu que l'excitation fondamentale et la commande associée correspondent à $k = 1$, et que $\underline{y}$ est un nombre entier tendant vers $\infty$.

On constate donc que, dans la présente invention, la boucle fermée est, en quelque sorte, localisée dans chaque module, tout en prenant éventuellement en compte le fonctionnement des autres modules actifs et, éventuellement, d'autres liaisons passives, comme on le verra en détail par la suite Comme déjà indiqué, cela permet d'éviter les erreurs et incertitudes liées à des mesures effectuées sur le fuselage de l'aéronef.

Comme déjà mentionné, chaque capteur 10 peut être constitué par une jauge extensométrique sur chaque module actif 7 et, éventuellement, au niveau de l'interface entre tout élément de liaison passif supplémentaire 16 (figure 1) et le fuselage 5, pour détecter les déformations relatives des matériaux sollicités statiquement et dynamiquement. Le signal électrique correspondant est alors traité par le calculateur 12 pour commander chaque actionneur 9. Par conséquent, on détecte une déformation relative $\varepsilon = \Delta l/l$ dont on cherche les composantes harmoniques $\varepsilon_{kb\Omega}$ [ou $\varepsilon_{kf}$ où $\underline{f}$ (fréquence fondamentale de l'excitation) = $b\Omega$] qui sont représentatives des composantes harmoniques de rang $\underline{k}$ de la force d'excitation dynamique à la fréquence $b\Omega$ à filtrer en tout ou partie par chacun des actionneurs.

Deux techniques sont envisageables pour déduire les composantes $\varepsilon_{kf}$ de la mesure globale $\varepsilon = \varepsilon_{(t)}$ avec $t$ = temps.

1/ L'analyse de Fourier consistant à développer la fonction temporelle $\varepsilon$, périodique et de pulsation $\omega$ avec $\omega = 2\pi b\Omega$ en une série de sinusoïdes de pulsation $k\omega$ ($1 \leq k \leq y$) et d'angle de phase $\phi_k$, soit :

$$\varepsilon_{(t)} = \varepsilon_o + \varepsilon_{1f}\sin(\omega t + \phi_1) + ... + \varepsilon_{kf}\sin(k\omega t + \phi_k) + ...$$

puis à déterminer analytiquement les quantités $\varepsilon_{kf}$ et $\phi_k$ ($k = 1$ à $y$), et à ne retenir par exemple que "p" valeurs de $\underline{k}$.

L'application de cette méthode n'est envisageable que si les commandes sont dépendantes, c'est-à-dire si la commande de chaque actionneur tient compte des effets des autres actionneurs ou encore de l'ensemble des mesures (selon, par exemple, le critère de performances proposé ci-après). Dans le cas contraire, la convergence des algorithmes de calcul de chaque module est trop lente, voire impossible, vis-à-vis des actions des autres modules et, par conséquent, par rapport à l'évolution du niveau vibratoire à contrôler.

2/ L'analyse temporelle consistant à filtrer, de façon numérique ou analogique avec un filtre passe-bande et un faible temps d'échantillonnage, les composantes harmoniques de $\varepsilon_{(t)}$ qu'il y a lieu d'atténuer, voire d'annuler. Un calculateur en temps réel (c'est-à-dire à temps de calcul faible par rapport à la constante de temps prépondérante du système) élabore alors les signaux électriques en temps réel à transmettre à l'actionneur. Compte tenu de ces caractéristiques, cette méthode s'applique dans tous les cas.

Dans le cas d'un seul actionneur commandé à partir de la mesure de la déformation de l'élément de liaison auquel il est relié ou intégré, l'effort dynamique peut être simplement annulé. Un résultat identique est obtenu dans le cas de plusieurs actionneurs dont les commandes sont indépendantes et élaborées, pour chacun d'eux, à partir de l'effort exercé sur le plancher mécanique. Il peut en être encore de même lorsque les commandes sont dépendantes car on démontre que, si une structure est contrôlée par N actionneurs, il est possible d'annuler N mesures choisies et, par conséquent, celles relatives aux allongements dynamiques des éléments de liaison munis d'un actionneur. Il s'agit d'une solution théoriquement idéale en absence de toute liaison passive.

Cependant, si le fuselage est sensible aux excitations transmises par des liaisons passives disposées par exemple en fond de boîte de transmission principale (mouvements de tamis longitudinal ou transversal, par exemple), le dispositif tel que décrit ci-dessus pourra s'avérer insuffisant.

Pour éviter cet inconvénient, la première solution consiste à remplacer les liaisons fond de boîte de transmission-fuselage par des éléments isolateurs actifs constitués par des modules identiques à ceux précédemment décrits.

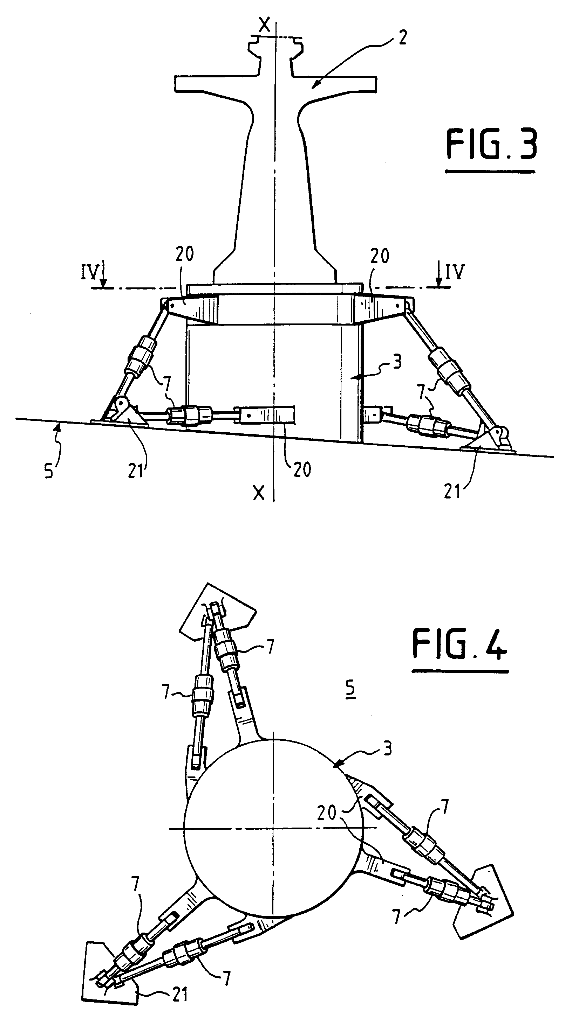

Comme le mouvement d'un corps rigide est décrit par trois déplacements et trois rotations, il y a six degrés de liberté à contrôler activement. Ainsi, la solution minimale, permettant d'éliminer théoriquement tout transfert d'excitations dynamiques du rotor au fuselage, consiste à prévoir la mise en place de six modules actifs selon l'invention, conformément à l'exemple de réalisation illustré par les figures 3 et 4. Il s'agit, à nouveau, d'une configuration théoriquement idéale.

Comme on peut le voir sur ces figures, trois éléments de liaison 7 sont disposés entre la partie supérieure de la boîte de transmission principale 3 et la structure supérieure du fuselage 5 suivant les arêtes d'un trièdre dont le sommet est situé sur l'axe X-X du rotor principal de sustentation 2, et trois autres éléments de liaison 7 sont disposés entre le fond, sensiblement circulaire, de la boîte de transmission principale 3 et la structure supérieure de fuselage 5, tangentiellement au fond de la boîte de transmission principale et de façon équidistante entre eux. Les éléments de liaison 7 sont fixés à la boîte de transmission principale 3 et au fuselage 5 par l'intermédiaire de chapes usuelles 20,21.

Dans l'hypothèse où les liaisons 16 fond de boîte de transmission principale-fuselage restent passives, une deuxième solution revient à prendre en compte la mesure des déformations introduites, dans le fuselage, par ces liaisons. Par exemple, si on dispose de N modules actifs, liés à N mesures de déformation, et de P liaisons passives 16 (par exemple au nombre de trois), liées à M mesures, les commandes, dépendantes, des N modules peuvent être optimisées en appliquant, par exemple, le critère quadratique suivant PI, ou critère de performances, à minimiser pour établir les commandes optimales à engendrer :

$$PI = \sum_{k=1}^{p} \left[ \sum_{i=1}^{N+M} a_{ii} \, (\varepsilon_{kf})^2_{\ i} + \sum_{(i \neq j)=1}^{N+M} a_{ij} \, (\varepsilon_{kf})_i \, (\varepsilon_{kf})_j \right]$$

où $\varepsilon_{kf}$ désigne la composante harmonique de rang $\underline{k}$, $\underline{f}$ étant la fréquence fondamentale $b\Omega$, $\underline{p}$ désigne le nombre d'harmoniques que l'on veut atténuer, et $|a|$ une matrice de pondération qui module les commandes vers les différents N actionneurs, permettant de ce fait un réglage optimal de la suspension. Les efforts dynamiques sont alors non nuls dans les liaisons boîte de transmission principale-fuselage.

Plus précisément, ce critère de performances équivaut à :

$$PI = \varepsilon^H a \, \varepsilon$$

où $\varepsilon$ est le vecteur des déformations relatives mesurées, $\varepsilon^H$ la matrice transposée conjuguée déduite de $\varepsilon$, et $|a|$ la matrice de pondération associée aux mesures.

On notera que, compte tenu des degrés de liberté des liaisons passives 16, le nombre de mesures M peut être différent du nombre P de liaisons passives. Si les mesures M concernent les déplacements, par exemple, des P liaisons passives au niveau du fuselage, il s'avère que, pour chaque liaison P, on a trois mesures possibles, soit M = 3xP , et, pour cela, on peut prévoir autant de capteurs que de mesures à effectuer.

## Revendications

1. Procédé pour filtrer les excitations vibratoires transmises entre deux pièces (3,5), reliées par au moins un élément de liaison (7) comprenant un organe (8) de transmission de l'effort statique entre lesdites pièces (3,5) et un actionneur (9) associé audit organe de transmission (8), procédé dans lequel :

   - on mesure une grandeur physique représentative des excitations vibratoires transmises de l'une à l'autre pièce et on engendre des premiers signaux correspondants ;
   - on traite, par des moyens de traitement (12), lesdits premiers signaux pour convertir ceux-ci en des seconds signaux de commande dudit actionneur (9) ;

   caractérisé en ce que, en tant que grandeur physique, on mesure la déformation axiale de l'organe de transmission (8) dudit élément de liaison (7), et en ce que le découplage de l'effort statique et des excitations vibratoires est effectué par lesdits moyens de traitement (12), de sorte que lesdits seconds signaux de commande pilotent l'actionneur pour s'opposer strictement auxdites excitations vibratoires.

2. Procédé selon la revendication 1 dans le cas où une pluralité d'éléments de liaison (7) relient lesdites pièces (3,5), caractérisé en ce qu'on mesure ladite grandeur physique sur chacun desdits éléments de liaison (7).

3. Procédé selon l'une quelconque des revendications 1 ou 2,
   caractérisé en ce que, pendant le traitement desdits premiers signaux, on identifie, dans chaque élément de liaison (7), la ou les composantes harmoniques des excitations vibratoires auxquelles l'actionneur (9) respectif doit s'opposer.

4. Procédé selon la revendication 3,
   caractérisé en ce que, pour ladite identification, on effectue une analyse temporelle en temps réel, par filtrage passe-bande numérique ou analogique.

5. Procédé selon la revendication 3,
   caractérisé en ce que, pour ladite identification, on effectue une analyse de Fourier.

6. Procédé selon l'une quelconque des revendications 2 à 5,
   caractérise en ce que lesdits seconds signaux de commande des différents actionneurs (9) sont engendrés de façon indépendante.

7. Procédé selon l'une quelconque des revendications 2 à 5,
   caractérisé en ce que lesdits seconds signaux de commande des différents actionneurs (9) sont engendrés de façon dépendante.

8. Procédé selon l'une quelconque des revendications 2 à 7, dans le cas où des liaisons passives supplémentaires (16) sont prévues entre lesdites pièces (3,5),
   caractérisé en ce que :

   - on mesure de plus ladite grandeur physique sur chacune des liaisons passives supplémentaires (16) ; et
   - on élabore les signaux de commande, dépendants, de chacun desdits actionneurs (9), en appliquant une minimisation automatique et continue du critère de performances PI de formule :

   $$PI = \sum_{n=1}^{p} \left[ \sum_{i=1}^{N+M} a_{ii} \, (\varepsilon_{kf})^2_{\ i} + \sum_{(i \neq j)=1}^{N+M} a_{ij} \, (\varepsilon_{kf})_i \, (\varepsilon_{kf})_j \right]$$

   dans laquelle :

   .   N = nombre d'actionneurs et de mesures correspondantes,
   .   M = nombre de mesures sur les liaisons passives supplémentaires,
   .   $\varepsilon_{kf}$ = composante harmonique de ladite grandeur physique,
   .   p = nombre de composantes harmoniques à filtrer,
   .   |a| = matrice de pondération de l'effet de chaque élément de liaison.

9. Dispositif de liaison élastique entre deux pièces (3,5) pour transmettre de l'une à l'autre les efforts statiques dans l'axe du dispositif et simultanément filtrer les excitations vibratoires coaxiales associées qui sont transmises de l'une à l'autre, du type comportant :

   - au moins un élément de liaison (7) entre lesdites pièces (3,5) comprenant un organe (8) de transmission de l'effort statique entre lesdites pièces (3,5), et un actionneur (9) associé audit organe de transmission (8) ;
   - au moins un moyen de mesure (10) d'une grandeur physique représentative des excitations vibratoires transmises de l'une à l'autre pièce, et susceptible de fournir des premiers signaux correspondants ; et
   - des moyens électroniques de traitement (12) desdits premiers signaux pour convertir ceux-ci en des seconds signaux de commande dudit actionneur (9) ;

   caractérisé en ce que ledit moyen de mesure (10) est monté sur l'organe de transmission (8) dudit élément de liaison (7) et mesure la déformation axiale dudit organe (8) et en ce que lesdits moyens de traitement (12) découplent l'effort statique et les excitations vibratoires, de sorte que lesdits seconds signaux de commande pilotent l'actionneur pour s'opposer strictement auxdites excitations vibratoires.

**10.** Dispositif selon la revendication 9, comportant une pluralité desdits éléments de liaison (7) entre lesdites pièces (3,5) et une pluralité desdits moyens de mesure (10), caractérisé en ce qu'un moyen de mesure (10) est monté sur chacun desdits éléments de liaison (7).

**11.** Dispositif selon la revendication 10,
caractérisé en ce que chaque moyen de mesure (10) est une jauge extensométrique.

**12.** Dispositif selon l'une quelconque des revendications 9 à 11,
caractérisé en ce que ledit actionneur est un vérin à double effet (9) monté en parallèle sur ledit organe de liaison (8), et commandé par l'intermédiaire d'une électrovanne (14).

**13.** Dispositif selon l'une quelconque des revendications 9 à 12,
caractérisé en ce que lesdits moyens électroniques de traitement (12) comprennent des moyens d'analyse pour identifier, dans chaque élément de liaison (7), la ou les composantes harmoniques des excitations vibratoires auxquelles l'actionneur respectif (9) doit s'opposer.

**14.** Dispositif selon la revendication 13,
caractérisé en ce que lesdits moyens d'analyse effectuent une analyse temporelle en temps réel, par filtrage passe-bande numérique ou analogique.

**15.** Dispositif selon la revendication 13,
caractérisé en ce que lesdits moyens d'analyse effectuent une analyse de Fourier.

**16.** Dispositif selon l'une quelconque des revendications 9 à 15 dans lequel des liaisons passives supplémentaires (16) sont prévues entre lesdites pièces (3,5),
caractérisé en ce que des moyens additionnels de mesure de ladite grandeur physique sont montés sur lesdites liaisons passives supplémentaires (16) et en ce que les signaux de commande dépendants de chacun desdits actionneurs (9) sont élaborés en appliquant une minimisation automatique et continue du critère de performances PI de formule :

$$PI = \sum_{n=1}^{p} \left[ \sum_{i=1}^{N+M} a_{ii} \left( \varepsilon_{kf} \right)^2{}_i + \sum_{(i \neq j)=1}^{N+M} a_{ij} \left( \varepsilon_{kf} \right)_i \left( \varepsilon_{kf} \right)_j \right]$$

dans laquelle :

- $N$ = nombre d'actionneurs et de mesures correspondantes,
- $M$ = nombre de mesures sur les liaisons passives supplémentaires,
- $\varepsilon_{kf}$ = composante harmonique de ladite grandeur physique,
- $p$ = nombre de composantes harmoniques à filtrer,
- $|a|$ = matrice de pondération de l'effet de chaque élément de liaison.

**17.** Aéronef à voilure tournante, notamment hélicoptère, comportant un rotor principal de sustentation (2) entraîné par une boîte de transmission principale (3) de la puissance motrice, qui supporte un fuselage (5),
caractérisé en ce qu'il comprend un dispositif (6) selon l'une quelconque des revendications 9 à 16, dont les éléments de liaison (7) sont disposés entre la boîte de transmission principale (3) et le fuselage (5).

**18.** Aéronef à voilure tournante selon la revendication 17,
caractérisé en ce qu'il comprend au moins trois dits éléments de liaison (7) disposés entre la partie supérieure de ladite boîte de transmission principale (3) et la structure supérieure dudit fuselage (5) suivant les arêtes d'un trièdre dont le sommet est situé sur l'axe (X-X) du rotor principal de sustentation (2).

**19.** Aéronef à voilure tournante selon la revendication 18,
caractérisé en ce qu'au moins trois autres éléments de liaison (7) sont disposés entre le fond de ladite boîte de transmission principale (3) et la structure supérieure dudit fuselage (5), tangentiellement au fond de ladite boîte de transmission principale (3) et de façon équidistante.

**Claims**

1. Method for filtering the vibratory excitations transmitted between two parts (3, 5), linked by at least one linking element (7) comprising a member (8) for transmission of the static force between the said parts (3, 5), and an actuator (9) associated with the said transmission member (8), in which method:

   - a physical quantity which is representative of the vibratory excitations transmitted from one part to the other is measured, and corresponding first signals are generated;
   - the said first signals are processed by processing means (12), in order to convert them into second control signals for the said actuator (9);

   characterized in that as physical quantity, the axial deformation of the transmission member (8) of the said linking element (7) is measured, and in that the decoupling of the static force and of the vibratory excitations is carried out by the said processing means (12), in such a way that the said second control signals drive the actuator in order to exactly oppose the said vibratory excitations.

2. Method according to Claim 1 in the case where a plurality of linking elements (7) link the said parts (3, 5), characterized in that the said physical quantity is measured on each of the said linking elements (7).

3. Method according to either of Claims 1 and 2, characterized in that during the processing of the said first signals, the harmonic component or components of the vibratory excitations which the respective actuator (9) has to oppose is/are identified in each linking element (7).

4. Method according to Claim 3, characterized in that, for the said identification, a time analysis is carried out in real time by digital or analogue bandpass filtering.

5. Method according to Claim 3, characterized in that, for the said identification, a Fourier analysis is carried out.

6. Method according to any one of Claims 2 to 5, characterized in that the said second control signals for the various actuators (9) are generated independently.

7. Method according to any one of Claims 2 to 5, characterized in that the said second control signals for the various actuators (9) are generated dependently.

8. Method according to any one of Claims 2 to 7 in the case where additional passive links (16) are provided between the said parts (3, 5), characterized in that:

   - the said physical quantity is moreover measured on each of the additional passive links (16); and
   - the dependent control signals for each of the said actuators (9) are derived by applying an automatic and continuous minimization of the performance criterion PI of formula:

$$PI = \sum_{n=1}^{p} \left[ \sum_{i=1}^{N+M} a_{ii} \left( \varepsilon_{kf} \right)^2_i + \sum_{(i \neq j)=1}^{N+M} a_{ij} \left( \varepsilon_{kf} \right)_i \left( \varepsilon_{kf} \right)_j \right]$$

   in which:

   - N = number of actuators and corresponding measurements,
   - M = number of measurements on the additional passive links,
   - $\varepsilon_{kf}$ = harmonic component of the said physical quantity,
   - p = number of harmonic components to be filtered,
   - |a| = weighting matrix for the effect of each linking element.

9. Elastic linking device between two parts (3, 5) for transmitting, from one to the other, the static forces in the axis of the device and simultaneously filtering the associated coaxial vibratory excitations which are transmitted from one to the other, of the type comprising:

- at least one linking element (7) between the said parts (3, 5) comprising a transmission member (8) for the static force between the said parts (3, 5), and an actuator (9) associated with the said transmission member (8);
- at least one means of measurement (10) of a physical quantity which is representative of the vibratory excitations transmitted from one part to the other, and able to supply corresponding first signals; and
- electronic processing means (12) for the said first signals in order to convert them into second control signals for the said actuator (9);

characterized in that the said measurement means (10) is mounted on the transmission member (8) of the said linking element (7) and measures the axial deformation of the said member (8) and in that the said processing means (12) decouple the static force and the vibratory excitations, in such a way that the said second control signals drive the actuator in order to exactly oppose the said vibratory excitations.

10. Device according to Claim 9, comprising a plurality of the said linking elements (7) between the said parts (3, 5) and a plurality of the said measurement means (10), characterized in that a measurement means (10) is mounted on each of the said linking elements (7)

11. Device according to Claim 10, characterized in that each measurement means (10) is an extensometric gauge.

12. Device according to any one of Claims 9 to 11, characterized in that the said actuator is a double-acting jack (9) mounted in parallel on the said linking member (8), and controlled by means of a solenoid valve (14).

13. Device according to any one of Claims 9 to 12, characterized in that the said electronic processing means (12) comprise analysis means for identifying, in each linking element (7), the harmonic component or components of the vibratory excitations which the respective actuator (9) has to oppose.

14. Device according to Claim 13, characterized in that the said analysis means carry out a time analysis in real time, by digital or analogue bandpass filtering.

15. Device according to Claim 13, characterized in that the said analysis means carry out a Fourier analysis.

16. Device according to any one of Claims 9 to 15, in which additional passive links (16) are provided between the said parts (3, 5), characterized in that additional measurement means for the said physical quantity are mounted on the said additional passive links (16) and in that the dependent control signals for each of the said actuators (9) are derived by applying an automatic and continuous minimization of the performance criterion PI of formula:

$$PI = \sum_{n=1}^{p} \left[ \sum_{i=1}^{N+M} a_{ii} \left( \varepsilon_{kf} \right)^2_i + \sum_{(i \neq j)=1}^{N+M} a_{ij} \left( \varepsilon_{kf} \right)_i \left( \varepsilon_{kf} \right)_j \right]$$

in which:

- N = number of actuators and corresponding measurements,
- M = number of measurements on the additional passive links,
- $\varepsilon_{kf}$ = harmonic component of the said physical quantity,
- p = number of harmonic components to be filtered,
- |a| = weighting matrix for the effect of each linking element.

17. Aircraft with rotating wings, especially a helicopter, comprising a main lift rotor (2) driven by a main transmission gearbox (3) for the motive power, which gearbox supports a fuselage (5), characterized in that it comprises a device (6) according to any one of Claims 9 to 16, whose linking elements (7) are arranged between the main transmission gearbox (3) and the fuselage (5).

18. Aircraft with rotating wings according to Claim 17, characterized in that it comprises at least three the said linking elements (7) arranged between the upper part of the said main transmission gearbox (3) and the upper structure of the said fuselage (5) along the edges of a trihedron whose peak is situated on the axis (X-X) of the main lift rotor (2).

**19.** Aircraft with rotating wings according to Claim 18, characterized in that at least three other linking elements (7) are arranged between the bottom of the said main transmission gearbox (3) and the upper structure of the said fuselage (5), tangentially to the bottom of the said main transmission gearbox (3) and equidistantly.

## Patentansprüche

**1.** Verfahren zum Ausfiltern der Schwingungserregungen, die zwischen zwei Teilen (3,5) übertragen werden, die durch mindestens ein Verbindungselement (7) bestehend aus einem Organ (8) zur Übertragung der statischen Kraft zwischen den Teilen (3,5) und einem dem Übertragungsorgan (8) zugeordneten Stellglied (9) verbunden sind, wobei das Verfahren, bei dem:

- eine physikalische Größe gemessen wird, die für die zwischen den Teilen übertragenen Schwingungserregungen repräsentativ ist, und erste entsprechende Signale erzeugt werden;
- mit Verarbeitungsmitteln (12) die ersten Signale zu zweiten Signalen zur Steuerung des Stellglieds (9) verarbeitet werden,

dadurch gekennzeichnet, daß als physikalische Größe die axiale Verformung des Übertragungsorgans (8) des Verbindungslements (7) gemessen wird, und dadurch, daß die Entkopplung von statischer Kraft und Schwingungserregungen durch die Verarbeitungsmittel (12) erfolgt, so daß die zweiten Steuersignale das Stellglied so steuern, daß es den Schwingungserregungen genau entgegenwirken kann.

**2.** Verfahren nach Anspruch 1, wenn die Teile (3,5) durch eine Vielzahl von Verbindungselementen (7) verbunden sind, dadurch gekennzeichnet, daß die physikalische Größe an jedem der Verbindungselemente (7) gemessen wird.

**3.** Verfahren nach einem der Ansprüche 1 oder 2
dadurch gekennzeichnet, daß bei der Verarbeitung der ersten Signale in jedem Verbindungselement (7) die harmonische Komponente oder harmonischen Komponenten der Schwingungserregungen ermittelt werden, denen das entsprechende Stellglied (9) entgegenwirken soll.

**4.** Verfahren nach Anspruch 3,
dadurch gekennzeichnet, daß für diese Ermittlung eine Zeitanalyse in Echtzeit durch digitale oder analoge Bandpaßfilterung durchgeführt wird.

**5.** Verfahren nach Anspruch 3,
dadurch gekennzeichnet, daß für diese Ermittlung eine Fourier-Analyse durchgeführt wird.

**6.** Verfahren nach einem der Ansprüche 2 bis 5,
dadurch gekennzeichnet, daß die zweiten Steuersignale für die verschiedenen Stellglieder (9) unabhängig erzeugt werden.

**7.** Verfahren nach einem der Ansprüche 2 bis 5,
dadurch gekennzeichnet, daß die zweiten Steuersignale für die verschiedenen Stellglieder (9) abhängig erzeugt werden.

**8.** Verfahren nach einem der Ansprüche 2 bis 7, wenn zwischen den Teilen (3,5) zusätzliche passive Verbindungen vorgesehen sind,
dadurch gekennzeichnet, daß:

- außerdem die physikalische Größe an jeder zusätzlichen passiver Verbindung (16) gemessen wird und
- die abhängigen Steuersignale für jedes Stellglied (9) erzeugt werden, indem eine kontinuierliche automatische Minimierung des Leistungskriteriums PI angewendet wird, dessen Formel lautet:

$$PI = \sum_{n=1}^{p} \left[ \sum_{i=1}^{N+M} a_{ii} \left( \varepsilon_{kf} \right)^2_i + \sum_{(i \neq j)=1}^{N+M} a_{ij} \left( \varepsilon_{kf} \right)_i \left( \varepsilon_{kf} \right)_j \right]$$

in der sind:

.  N = Anzahl der Stellglieder und der entsprechenden Messungen,

.  M = Anzahl der Messungen an den zusätzlichen passiven Verbindungen,

.  $\varepsilon_{kf}$ = harmonische Komponente der physikalischen Größe,

.  p = Anzahl der auszufilternden harmonischen Komponenten,

.  |a| = Matrix zum Wichten der Wirkung jedes Verbindungselements.

9.  Elastische Verbindungsvorrichtung zwischen zwei Teilen (3,5), um zwischen denselben die statischen Kräfte in der Achse der Vorrichtung zu übertragen und gleichzeitig die zwischen denselben übertragenen entsprechenden koaxialen Schwingungserregungen auszufiltern, mit:

-  mindestens einem Verbindungselement (7) zwischen den Teilen (3,5) mit einem Organ (8) zur Übertragung der statischen Kraft zwischen den Teilen (3,5) und einem dem Übertragungsorgan (8) zugeoroneten Stellglied (9);
-  mindestens einem Mittel (10) zur Messung einer physikalischen Größe, die für die Schwingungserregungen repräsentativ ist, die von einem zum anderen Teil übertragen werden, und entsprechende erste Signale abgeben kann, und
-  elektronischen Mitteln (12) zur Verarbeitung der ersten Signale in zweite Steuersignale für das Stellglied (9);

dadurch gekennzeichnet, daß das Meßmittel (10) am Übertragungsorgan (8) des Verbindungselements (7) angeordnet ist und die axiale Verformung des Organs (8) mißt, und dadurch, daß durch die Verarbeitungsmittel (12) die statische Kraft und die Schwingungserregungen entkoppelt werden, so daß die zweiten Steuersignale das Stellglied so steuern, daß dieses den Schwingungserregungen genau entgegenwirkt.

10.  Vorrichtung nach Anspruch 9, mit einer Vielzahl von Verbindungselementen (7) zwischen den Teilen (3,5) und einer Vielzahl von Meßmitteln (10),
dadurch gekennzeichnet, daß an jedem der Verbindungselemente (7) ein Meßmittel (10) angebracht ist.

11.  Vorrichtung nach Anspruch 10,
dadurch gekennzeichnet, daß jedes Meßmittel (10) ein Dehnungsmeßstreifen ist.

12.  Vorrichtung nach einem der Ansprüche 9 bis 11,
dadurch gekennzeichnet, daß das Stellglied ein doppeltwirkender Zylinder (9) ist, der parallel zum Verbindungsorgan (8) angeordnet ist und von einem Magnetventil (14) gesteuert wird.

13.  Vorrichtung nach einem der Ansprüche 9 bis 12,
dadurch gekennzeichnet, daß die elektronischen Verarbeitungsmittel (12) Analysemittel haben, um in jedem Verbindungselement (7) die harmonische Komponente oder harmonischen Komponenten der Schwingungserregungen zu ermitteln, denen das entsprechende Stellglied (9) entgegenwirken soll.

14.  Vorrichtung nach Anspruch 13,
dadurch gekennzeichnet, daß die Analysemittel eine Zeitanalyse in Echtzeit durch digitale oder analoge Bandpaßfilterung ausführen.

15.  Vorrichtung nach Anspruch 13,
dadurch gekennzeichnet, daß die Analysemittel eine Fourier-Analyse ausführen.

16.  Vorrichtung nach einem der Ansprüche 9 bis 15, in der zwischen den Teilen (3,5) zusätzliche passive Verbindungen (16) vorgesehen sind,
dadurch gekennzeichnet, daß zusätzliche Mittel zur Messung der physikalischen Große an den zusätzlichen passiven Verbindungen (16) angebracht sind, und dadurch, daß die abhängigen Steuersignale jedes Steilglieds (9) durch kontinuierliche automatische Minimierung des Leistungskriteriums PI erzeugt werden, dessen Formel lautet:

$$PI = \sum_{n=1}^{p} \left[ \sum_{i=1}^{N+M} a_{ii} \left( \varepsilon_{kf} \right)^2_{i} + \sum_{(i \neq j)=1}^{N+M} a_{ij} \left( \varepsilon_{kf} \right)_{i} \left( \varepsilon_{kf} \right)_{j} \right]$$

in der sind:

.  N = Anzahl der Stellglieder und der entsprechenden Messungen,

. M = Anzahl der Messungen an den zusätzlichen passiven Verbindungen,

. $\varepsilon_{kf}$ = harmonische Komponente der physikalischen Größe,

. p = Anzahl der auszufilternden harmonischen Komponenten,

. |a| = Matrix zum Wichten der Wirkung jedes Verbindungselements.

17. Drehflügler, insbesondere Hubschrauber, mit einem Hauptauftriebsrotor (2), der durch ein Hauptgetriebe (3), an dem sich ein Rumpf (5) befindet und an das die Antriebskraft gelangt, angetrieben wird, dadurch gekennzeichnet, daß dieser eine Vorrichtung (6) nach einem der Ansprüche 9 bis 16 hat, deren Verbindungselemente (7) zwischen dem Hauptgetriebe (3) und dem Rumpf (5) angeordnet sind.

18. Drehflügler nach Anspruch 17, dadurch gekennzeichnet, daß dieser mindestens drei sogenannte Verbindungselemente (7) hat, die zwischen dem oberen Teil des Hauptgetriebes (3) und der oberen Struktur des Rumpfes (5) entsprechend den Kanten eines Achsenkreuzes angeordnet sind, dessen Scheitelpunkt an der Achse (X-X) des Hauptauftriebsrotors (2) liegt.

19. Drehflügler nach Anspruch 18, dadurch gekennzeichnet, daß zwischen dem Boden des Hauptgetriebes (3) und der oberen Struktur des Rumpfes (5) mindestens drei weitere Verbindungselemente (7) tangential zum Boden des Hauptgetriebes (3) und im gleichen Abstand zueinander angeordnet sind.

FIG.1

EP 0 530 075 B1

FIG.2

FIG.3

FIG.4